# EUROPÄISCHE PATENTSCHRIFT

(11) **EP 0 903 269 B1**
(45) Veröffentlichungstag und Bekanntmachung des Hinweises auf die Patenterteilung: **02.10.2002**
(21) Anmeldenummer: 98116405.6
(22) Anmeldetag: 29.08.1998
(51) Int. Cl.: B60R 21/20

(54) **Airbagmodul in einem Kraftfahrzeug**
Airbagmodul in a vehicle
Module de coussin gonflable dans un véhicule

(30) Priorität: 27.08.1998 DE 19838641; 29.10.1997 DE 19747730; 18.09.1997 DE 29716793 U
(43) Veröffentlichungstag der Anmeldung: 24.03.1999
(73) Patentinhaber: DaimlerChrysler AG, 70567 Stuttgart (DE)
(72) Erfinder: Hirth, Andreas, 69234 Diehlheim (DE); Tschäschke, Ulrich, 71139 Ehningen (DE)

(56) Entgegenhaltungen:
- EP-A- 0 841 221
- DE-A- 19 612 227
- PATENT ABSTRACTS OF JAPAN vol. 098, no. 010, 31. August 1998 & JP 10 138861 A (TOYOTA MOTOR CORP), 26. Mai 1998

## Beschreibung

Die Erfindung betrifft ein Airbagmodul in einem Kraftfahrzeug gemäß dem Oberbegriff des Anspruches 1.

Aus der DE 44 26 848 A1, die im Oberbegriff des Anspruches 1 berücksichtigt ist, ist ein Windowbag bekannt, der in einem Behälter zusammengelegt untergebracht ist, welcher entlang eines Türrahmenteiles im Fahrgastraum mittels einer Klemmvorrichtung am Rahmenteil gehalten wird. Die Zusammenfassung des seitlichen Windowbags mit dem Gasgenerator in einem festlegbaren Behälter zu einem Airbagmodul läßt eine einfache und kostengünstige Montage zu.

In der DE 22 49 988 A1 ist ein gasbefüllbarer Airbag beschrieben, der im Kopfbereich eines Insassens in einem Behälter seitlich an einem Dachrahmen angeordnet ist und mit diesem ein Teil der Dachrahmenverkleidung bildet.

Auch aus der DE 92 11 423 U1 ist ein gasbefüllbarer Airbag bekannt, der in einem Behälter zusammengefaltet an Rahmenabschnitten des Seitenfensters festgelegt ist.

Aus der DE 296 05 896 U1 ist eine Seitenaufprall-Schutzeinrichtung für Fahrzeuginsassen bekannt, die einen Kopfairbag umfaßt, der sich zusammengefaltet in einem Montageschlauch längs eines Dachrahmens erstreckt.

Die DE 296 03 316 U1 beinhaltet eine Seitenaufprall-Schutzeinrichtung für Fahrzeuginsassen mit einem Windowbag, der mit dem befüllenden Gasgenerator an einer Adapterplatte gehalten ist, die zur Festlegung des Modules an einem Dachrahmen dient. Das Modul wird von einer Dachverkleidungsplatte überdeckt.

Des weiteren zeigt die GB 2 297 950 A einen Windowbag, der in einem Kanal im Türrahmen eines Kraftwagens verstaut liegt, aus dem der Windowbag bei einem Aufprall austritt und sich über die Seitenscheibe ausbreitet.

Bei diesen bekannten Airbaganordnungen tritt die Schutzwirkung beim Aufprall des Insassens immer erst nach der Aktivierung des Airbags ein.

Des weiteren sind aus dem Stand der Technik Druckschriften bekannt, in denen Airbags beschrieben sind, die nicht als Windowbag ausgebildet und entlang eines Fahrzeugdachrahmens ausgebildet sind. Diesen Airbags sind energieabsorbierende Elemente zugeordnet, welche aber nicht den Insassen bei einem Anprall seitlich des zusammengelegten und noch nicht aktivierten Windowbags vor einem harten Anprall an der gegenüber dem Windowbag weiter zurückliegenden Seitenwand oder dem Dachrahmen des Fahrzeuges bewahren könnten.

In der EP 07 73 142 A1 ist ein Fahrerairbag beschrieben, der innerhalb des Airbags ein topfförmiges, energieabsorbierendes Element aufweist, welches bei einem Aufprall des Insassen, bei dem der Airbag noch nicht befüllt ist, verformt wird. Das topfförmige, energieabsorbierende Element weist Durchlässe für das Gas aus dem Gasgenerator auf. Diese würden bei einer vorhergehenden Verformung in ihrem lichten Querschnitt verändert werden und könnten damit eine gleichmäßige Befüllung des Gassackes behindern. Auch der Airbag läge nach der Verformung des energieabsorbierenden Elementes nicht mehr in der für eine günstige Entfaltung vorgesehenen Position. Seitlich des zusammengelegten Airbags wird durch dieses topfförmige Element keine Schutzfunktion erreicht.

Aus der EP 0 734 917 A1 ist eine Airbagabdeckung bekannt, welche zur Dämpfung eines Aufpralles eines Kopfes auf die Airbagabdeckung mit einer nachgebenden Sandwichbauweise ausgestattet ist. Die Abdeckung liegt über dem gefalteten Airbag mit weitem Abstand vor der Karosseriestruktur und hat deshalb keine dämpfende Wirkung auf den seitlich des gefalteten Airbags anprallenden Insassen.

In der EP 06 66 203 ist ein Airbagbehälter beschrieben, dessen gegen den Insassen gerichteter Öffnungsrand mit Schutzelementen verkleidet ist, um einen harten Anprall des Insassen auf diesen Rand zu vermeiden. Auch diese Schutzelemente liegen weit vor einer harten Karosseriestruktur und können deshalb den harten Aufprall auf diese nicht verhindern.

Des weiteren sind aus der EP 0 841 221 A1 sowie aus der JP 10-138861 A Airbagmodule mit einem Energieabsorbtionselement bekannt. Diese Energieabsorbtionselemente sind unabhängig von einem Airbagbehälter direkt an der Fahrzeugkarosserie angebunden. Aus diesem Grund ist keine modulare Vormontages des Airbagmoduls möglich.

Aus der EP 0 960 804 A2 ist eine Verkleidung für einen Dachhimmel bekannt, die an einigen Stellen dicker ausgeführt ist. Durch diese Schichtverdickung ergibt sich ein stoßabsorbierendes Sicherheitselement, durch das ein direktes Auftreffen auf einen Karosserierahmen verhindert wird. Das bekannte Sicherheitselement wird mit der gesamten Verkleidung an der Karosserie festgelegt. Es erfolgt keine Lagerung im oder am Airbagbehälter.

Die DE 196 12 227 A1 offenbart ein Blechformteil, welches zwei Funktionen übernimmt. Zum einen nimmt es einen Gassack auf, zum andern ist es nachgiebig gestaltet, so dass es als Deformationselement dienen kann. Das Blechfunktionsteil ist direkt an der Fahrzeugkarosserie angebunden.

Die Aufgabe der Erfindung besteht darin, die Schutzwirkung eines gattungsgemäßen Airbagmodules für einen Insassen zu verbessern.

Die Aufgabe wird durch die kennzeichnenden Merkmale des Patentanspruches 1 gelöst.

Ein zusätzlich im oder am Behälter für den Windowbag gelagertes und in das Airbagmodul integriertes energieabsorbierendes Element läßt eine einfache und kostengünstige Montage der Sicherheitsvorrichtung für den Aufprall des Insassen zu. Dabei wird dieser nicht nur dann vor Verletzungen geschützt, wenn sich der Windowbag nach einem Crashsignal durch die Gasbefüllung, z.B. aus einem Gasgenerator, vor den harten Seitenaufprallteilen im Fahrzeug aus dem Behälter heraus ausbreitet. Bei einem Aufprall, der noch nicht zur Befüllung des Windowbags führt, wird der Insasse auf das seitlich des zusammengelegten Windowbags zusätzlich angeordnete, energieabsorbierende Element treffen, das sich verformend nachgibt und dabei Energie absorbiert und den Insassen vor einem harten Anprall an der gegenüber dem Windowbag weiter zurückliegenden Seitenwand oder am Fahrzeugdachrahmen des Fahrzeuges bewahrt. Das als verformbares Rohr oder als Schaumkörper entlang des Fahrzeugdachrahmens verlaufende, bei seiner Verformung energieabsorbierend ausgebildete Element kann dabei seitlich der Entfaltungsrichtung des Windowbags festgelegt sein, so daß das Airbagmodul gegen den Fahrgastraum nicht breiter wird und den Fahrgastraum nicht verengt. Aus diesem Grund wird das energieabsorbierende Element vorteilhaft bei einem am Fahrzeugdachrahmen festgelegten Behälter mit einem Windowbag unterhalb von diesem im Behälter gelagert, wo es einen Kopfaufprall des Insassen bereits bei einer Aufprallkraft unterhalb der Auslöseschwelle des Windowbags wirksam dämpfen kann.

Weitere Vorteile und Ausgestaltungen gehen aus den Unteransprüchen und der Beschreibung hervor.

Die Erfindung ist nachstehend anhand einer Zeichnung näher beschrieben.

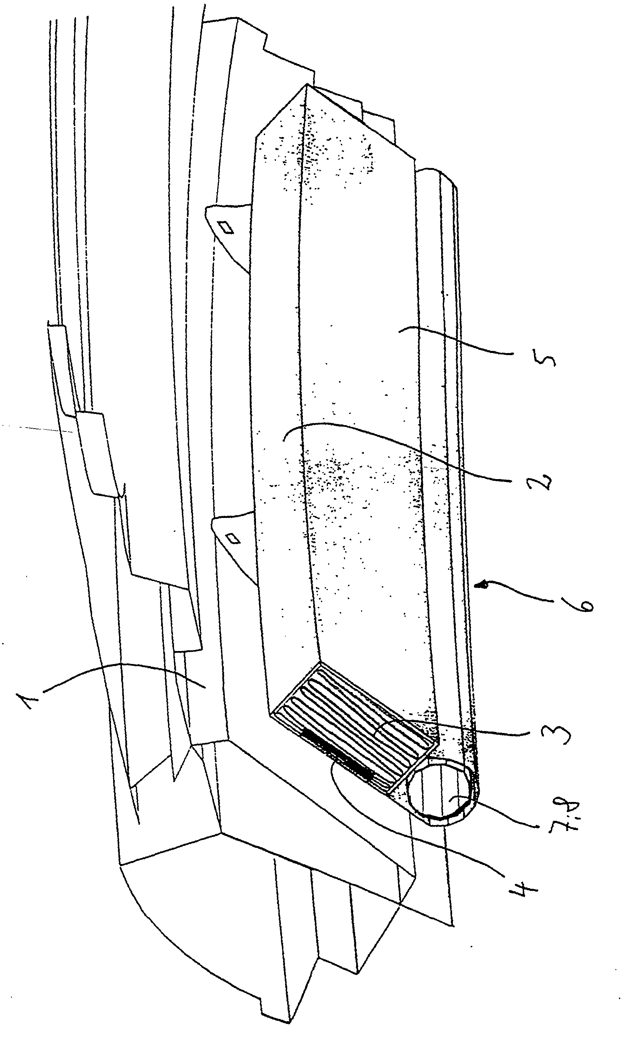

Die Figur zeigt einen im Innenraum eines Kraftwagens an einem Fahrzeugdachrahmen 1 befestigten, sich entlang des Fahrzeugdachrahmens 1 in Fahrzeuglängsrichtung erstreckenden Behälter 2 aus Kunststoff, der in einem Hohlraum einen zusammengelegten Windowbag 3 aufnimmt. Bei einem Aufprall des Kraftwagens, bei dem die sensierten Aufprallmeßwerte die Auslöseschwelle für den Windowbag 3 überschreiten, wird der Windowbag 3 mit Gas aus einem Gasgenerator 4 befüllt, drückt dabei die vordere Seite 5 des Behälters 2 klappenartig auf und dehnt sich nach unten über die nicht näher dargestellten Seitenscheiben des Kraftwagens wie ein schützender Vorhang aus, wodurch der Anprall eines Insassen gegen die Seitenscheiben verletzungsmindernd gedämpft wird.

Dieses einfach und kostengünstig montierbare Airbagmodul 6 nimmt neben dem Windowbag 3 mit den gasführenden Anschlüssen im Behälter 2 seitlich des zusammengelegten Windowbags zusätzlich ein energieabsorbierendes Element 7 in der Form eines Rohres 8 auf, welches dazu dient, den Insassen insbesondere bei einem Aufprall, bei dem der Windowbag 3 noch nicht ausgelöst ist, nachgebend aufzufangen, wobei vor allem bei der plastischen Verformung des Elementes 7 Energie absorbiert wird, und der Insasse beim Aufprall dadurch weniger belastet wird. Das energieabsorbierende Element 7 kann ein Kunststoffrohr oder ein Aluminiumrohr mit einem der möglichen Belastung angepaßten Profil mit oder ohne Querverrippung sein oder auch ein anderes, geeignetes Verformungsprofil aufweisen oder auch durch einen für die Aufpralldämpfung geeigneten Schaum gebildet werden und verläuft mit der Quererstreckung des Windowbags 3 schützend entlang des Fahrzeugdachrahmens 1 und kann den Insassen vor einem harten Anprall an der gegenüber dem Windowbag weiter zurückliegenden Seitenwand oder dem Fahrzeugdachrahmen 1 bewahren.

Die Anordnung des energieabsorbierenden Elementes 7 seitlich des zusammengelegten Windowbags 3, d.h. hier unterhalb des Windowbags 3, hat zudem den Vorteil, daß das Innenraum-Komfortmaß für den Kopf durch das energieabsorbierende Element 7 nicht verringert wird und deshalb mehr Kopffreiheit im Fahrgastraum verbleibt.

## Patentansprüche

1. Airbagmodul **für ein** Kraftfahrzeug mit einem länglichen Behälter, welcher entlang eines Fahrzeugdachrahmens festlegbar ist, und in dem ein Windowbag zusammengelegt liegt, der nach einem Crashsignal gasbefüllt aus dem Behälter austritt und Fahrzeugteile im Fahrgastraum flächig überdeckt,
**dadurch gekennzeichnet,**
**daß** im oder am Behälter (2), entlang des Fahrzeugdachrahmens (1), als Schutz beim Aufprall des Insassens seitlich des zusammengelegten Windowbags (3) zusätzlich ein durch seine Verformung beim Aufprall eines Insassens energieabsorbierendes Element (7) gelagert ist.

2. Airbagmodul nach Anspruch 1,
**dadurch gekennzeichnet,**
**daß** das energieabsorbierende Element (7) bei einem Aufprall wirksam ist, dessen Aufprallkraft unterhalb der Auslöseschwelle des Windowbags (3) liegt.

3. Airbagmodul nach Anspruch 1,
**dadurch gekennzeichnet,**
**daß** das energieabsorbierende Element (7) **unterhalb** des Windowbags (3) **angeordnet ist.**

4. Airbagmodul nach Anspruch 1,
**dadurch gekennzeichnet,**
**daß** das energieabsorbierende Element (7) als am Fahrzeugdachrahmen (1) längsverlaufendes Rohr (8) ausgebildet ist.

5. Airbagmodul nach Anspruch 1,
**dadurch gekennzeichnet,**
**daß** das energieabsorbierende Element (7) durch einen Schaumkörper gebildet ist.

## Claims

1. Air bag module for a motor vehicle with an oblong container, which can be fixed along a vehicle roof frame, disposed in which is a folded window bag which is released from the container inflated with gas when triggered by a crash signal and sits flat covering vehicle parts in the passenger compartment,
**characterised in that**
an element (7) which deforms to absorb energy on impact of the passenger is additionally mounted in or on the container (2) along the vehicle roof frame (1) as a protective measure for the passenger on impact in the event of the passenger's colliding with the area to the side of the folded window bag (3).

2. Air bag module as claimed in claim 1,
**characterised in that**
the energy-absorbing element (7) is activated in the event of an impact of which the impact force is below the trigger threshold of the window bag (3).

3. Air bag module as claimed in claim 1,
**characterised in that**
the energy-absorbing element is disposed underneath the window bag (3).

4. Air bag module as claimed in claim 1, **characterised in that** the energy-absorbing element (7) is provided in the form of a tube (8) extending longitudinally on the vehicle roof frame (1).

5. Air bag module as claimed in claim 1,
**characterised in that**
the energy-absorbing element (7) is a foam body.

## Revendications

1. Module de coussin gonflable pour un véhicule motorisé comportant un récipient longitudinal qui peut se fixer le long d'un cadre de toit de véhicule et dans lequel se trouve, replié, un coussin gonflable de fenêtre qui, après un signal de choc, sort, rempli de gaz, hors du récipient et recouvre à plat des parties du véhicule dans l'habitacle,
**caractérisé par le fait**
**que** dans ou sur le récipient (2), le long du cadre de toit de véhicule (1), est porté en outre, comme protection lors du heurt avec l'occupant, à côté du coussin gonflable de fenêtre (3), replié, un élément (7) absorbant de l'énergie par suite de sa déformation lors du heurt avec un occupant.

2. Module de coussin gonflable selon la revendication 1,
**caractérisé par le fait**
**que** l'élément (7) absorbant de l'énergie est actif lors d'un heurt dont la force de heurt est inférieure au seuil de déclenchement du coussin gonflable de fenêtre (3).

3. Module de coussin gonflable selon la revendication 1,
**caractérisé par le fait**
**que** l'élément (7) absorbant de l'énergie est disposé en-dessous du coussin gonflable de fenêtre (3).

4. Module de coussin gonflable selon la revendication 1,
**caractérisé par le fait**
**que** l'élément (7) absorbant de l'énergie est conçu sous forme d'un tube (8) disposé longitudinalement contre le cadre de toit de véhicule (1).

5. Module de coussin gonflable selon la revendication 1,
**caractérisé par le fait**
**que** l'élément (7) absorbant de l'énergie est formé par un corps en mousse.
